# EUROPÄISCHE PATENTANMELDUNG

(11) **EP 1 013 331 A1**
(43) Veröffentlichungstag der Anmeldung: **28.06.2000**
(21) Anmeldenummer: 99121824.9
(22) Anmeldetag: 04.11.1999
(51) Int. Cl.: B01D 53/22, B01D 63/08, C01B 3/50

(54) **Membranmodul zur selektiven Gasabtrennung in Plattenstapelbauweise**

(30) Priorität: 24.12.1998 DE 19860253
(71) Anmelder: DBB Fuel Cell Engines Gesellschaft mit beschränkter Haftung, 73230 Kirchheim/Teck-Nabern (DE)
(72) Erfinder: Breitschwerdt, Sven, 71336 Waiblingen (DE); Erdmann, Wolfgang, 70439 Stuttgart (DE); Heil, Dietmar, 88477 Schwendi (DE); Schmid, Carlo, 71229 Leonberg (DE); Wieland, Steffen, 70180 Stuttgart (DE)
(74) Vertreter: Kocher, Klaus-Peter Dipl.-Phys

(57) **Zusammenfassung**

Die Erfindung bezieht sich auf ein Membranmodul zur selektiven Gasabtrennung in Plattenstapelbauweise mit einer oder mehreren übereinandergestapelten Abtrenneinheiten (1) sowie zwischenliegenden und/oder stapelendseitigen Rahmenplatten (2,3), wobei jede Abtrenneinheit eine Trägerplatte (4) mit einer Trenngasaufnahmestruktur (5) und wenigstens eine zugehörige Gasabtrennmembran (7) aufweist und die Rahmenplatten eine Mischgasströmungsraumstruktur (15,16) besitzen.

Erfindungsgemäß beinhalten jede Abtrenneinheit (1) und die Rahmenplatten (2,3) in einem ersten und einem zweiten Seitenbereich (20,21) je eine sich in Stapelrichtung erstreckende, von überlappenden Öffnungen (22,23) in den Platten gebildete Mischgasanschlußkanalstrukturen (24,25), die mit den Mischgasströmungsraumstrukturen in Fluidverbindung stehen, sowie in einem dritten und vierten Seitenbereich (8,9) entsprechende, in Stapelrichtung verlaufende Trenngasanschlußkanalstrukturen (12,13), die mit der oder den Trenngasaufnahmestrukturen in Fluidverbindung stehen.

Verwendung z.B. in Brennstoffzellenfahrzeugen zur Bereitstellung von Wasserstoff durch selektive Abtrennung aus dem Reformatgas einer Reformierungsreaktion.

## Beschreibung

Die Erfindung bezieht sich auf ein Membranmodul zur selektiven Gasabtrennung in Plattenstapelbauweise nach dem Oberbegriff des Anspruchs 1.

Ein solches Membranmodul ist zur selektiven Wasserstoffabtrennung in der Offenlegungsschrift EP 0 718 031 A1 beschrieben. Beim dortigen Membranmodul bilden die Abtrenneinheiten wasserstoffdurchlässige Verbundmembranen, die aus einer Trägermatrix bestehen, die beidseitig unter Zwischenfügung einer flexiblen Zwischenschicht mit einer selektiv wasserstoffdurchlässigen Metallschicht beschichtet sind. Die Trägermatrix beinhaltet eine zum Abführen des abgetrennten Wasserstoffs geeignete Wasserstoffaufnahmestruktur, indem sie aus einem porösen, perforierten oder geschlitzten Metall- oder Keramikmaterial oder einem wasserstoffdurchlässigen Metallmaterial gebildet ist. Zum Abführen des abgetrennten Wasserstoffs aus dem Plattenstapel sind an einem Stapelseitenbereich senkrecht zur Stapelrichtung seitlich ausmündende Wasserstoffauslässe vorgesehen, wobei auf der gegenüberliegenden Stapelseite zugehörige Spülgaseinlässe seitlich in die jeweilige Trägermatrix einmünden. Die Verbundmembraneinheiten wechseln im Stapel mit Rahmenplatten ab, die unter Zwischenfügung von Dichtungen gegen die Verbundmembraneinheiten anliegend und deren innerer Bereich vollständig offen ist und auf diese Weise einen jeweiligen Mischgasströmungsraum bilden. Mittels einer entsprechenden Anschluß- und Verbindungsstruktur auf den beiden Seitenbereichen, an denen sich auch die Spülgaseinlässe und die Wasserstoffauslässe befinden, wird eine Mischgasströmungsführung erzielt, bei welcher das den Wasserstoff enthaltende Mischgas von einer Stapelstirnseite her in den Seitenbereich einer ersten Rahmenplatte, von dort durch deren Mischgasströmungsraum hindurch zum gegenüberliegenden Seitenbereich und dort unter Umlenkung um 180° zur nächsten Rahmenplatte und durch deren Mischgasströmungsraum hindurchgeleitet wird. Dies setzt sich fort, bis das Mischgas wassrstoffbefreit an der gegenüberliegenden Stapelstirnseite herausgeführt wird. Diese serpentinenförmige Mischgasströmungsführung bedingt entsprechende Druckverluste.

Aus der Patentschrift US 5.486.475 ist ein Membranmodul in Plattenstapelbauweise bekannt, bei dem eine Mehrzahl von Membrantascheneinheiten übereinandergestapelt sind, die aus einer Rahmenplatte bestehen, die oben und unten von einer gasdurchlässigen, flüssigkeitsfesten Membran umgeben ist, so daß im Inneren Taschen gebildet sind, die von einem Flüssigkeitsgemisch durchströmt werden können, mit der aus einem Mischgas abzutrennende, unerwünschte Gase zur Reaktion gebracht werden können. Die Rahmenplatten sind in einem Seitenbereich mit Einlaßöffnungen und in einem gegenüberliegenden Seitenbereich mit Auslaßöffnungen versehen, um die Mischung in die Taschen einleiten und aus diesen wieder abführen zu können. Zwischen je zwei Membrantascheneinheiten sind an gegenüberliegenden Stapelseitenbereichen Abstandshalter eingebracht, wodurch zwischen den einzelnen Membrantascheneinheiten entsprechende Freiräume gebildet sind, in die eine Stützstruktur eingebracht sein kann und in die das Mischgas eingeleitet wird. Die Abstandshalter sind derart gelocht, daß an den beiden zugehörigen Stapelseitenbereichen parallel zur Stapelrichtung verlaufend einerseits ein Verteilerkanal und andererseits ein Sammelkanal gebildet ist, um das Flüssigkeitsgemisch parallel in die Membrantaschen zuzuführen und wieder abzuführen.

Wasserstoffabtrennende Membranmodule werden beispielsweise in Brennstoffzellenfahrzeugen dazu verwendet, den durch eine Reformierungsreaktion eines Kohlenwasserstoffs oder Kohlenwasserstoffderivats erzeugten Wasserstoff selektiv aus dem Reformatgasgemisch abzutrennen, um ihn den Brennstoffzellen zuzuführen. Für derartige mobile Anwendungen in der Fahrzeugtechnik ist es aus Dynamik- und Bauraumgründen wünschenswert, das wasserstoffabtrennende Membranmodul so kompakt und leicht wie möglich zu gestalten. Daher sollte möglichst viel Membranfläche pro Volumeneinheit untergebracht werden können. Gleichzeitig ist die Strömungsführung zu berücksichtigen. Insbesondere sollten hohe Druckverluste vermieden werden, da sie die Leistungsfähigkeit des Membranmoduls herabsetzen. Denn die Abtrennleistung hängt direkt vom Druckgefälle zwischen dem hindurchgeleiteten Mischgas und dem daraus abgetrennten Gas ab. Andererseits muß das Membranmodul hohen Drücken unter Wasserstoffatmosphäre bei Temperaturen bis mindestens 350°C standhalten, und es sollte möglichst kostengünstig in hoher Stückzahl gefertigt werden können.

Der Erfindung liegt daher als technisches Problem die Bereitstellung eines Membranmoduls in Plattenstapelbauweise der eingangs genannten Art zugrunde, das sich bei gegebener, geforderter Abtrennleistung vergleichsweise kompakt, leicht und druckstabil mit relativ geringem Aufwand fertigen läßt und im Betrieb nur relativ geringe Druckverluste verursacht.

Die Erfindung löst dieses Problem durch die Bereitstellung eines Membranmoduls mit den Merkmalen des Anspruchs 1. Durch seinen modularen Aufbau in Plattenstapelbauweise kann es sehr flexibel für unterschiedliche Abtrennleistungen ausgelegt werden. Die Plattenstapelbauweise ermöglicht zudem eine kostengünstige Fertigung. Durch geeignet in jeweiligen Seitenbereichen in die Abtrenneinheiten und die Rahmenplatten eingebrachte Anschlußöffnungen sind in Stapelrichtung verlaufende Anschlußkanalstrukturen zum Zu- und Abführen des Mischgases sowie zum Abführen des Trenngases, d.h. des aus dem Mischgas selektiv abgetrennten Gases, gebildet. Über diese Anschlußkanalstrukturen kann das Mischgas mit relativ geringem Druckabfall parallel durch die Mischgasströmungsräume geführt und das abgetrennte Trenngas aus den Abtrenneinheiten abgezogen werden. Gleichzeitig erlaubt die Integration der Anschlußkanalstrukturen in den Plattenstapel eine kompakte Bauweise.

Ein nach Anspruch 2 weitergebildetes Membranmodul beinhaltet einen rechteckförmigen Plattenstapel, bei dem das Mischgas parallel zur längeren Rechteckseite durch den Stapel geführt wird. Demgegenüber wird das Trenngas im Kreuzstrom dazu über die kürzere Rechteckseite abgeführt. Damit läßt sich einerseits eine zur ausreichenden Trenngasabtrennung benötigte Mischgasströmungslänge bereitstellen, während der Stapel in der dazu senkrechten Querrichtung kürzer gehalten werden kann, was zu einem kompakten Aufbau und zu geringen Druckverlusten beiträgt.

Bei einem nach Anspruch 3 weitergebildeten Membranmodul weist die Trägerplatte jeder Abtrenneinheit ein- oder beiseitig eine Nut/Steg-Struktur auf, bei der die Nuten Kanäle zur Abführung des Trenngases bilden. Auf die Nut/Steg-Struktur ist die jeweilige Gasabtrennmembran unter Zwischenfügung einer porösen Stützstruktur aufgebracht. Dadurch wird die Membran ausreichend gestützt, und das von ihr selektiv abgetrennte Trenngas kann gleichmäßig in die Trägerplattennuten gelangen und von dort abgeführt werden.

Bei einem nach Anspruch 4 weitergebildeten Membranmodul ist die jeweilige Gasabtrennmembran, gegebenenfalls samt einer zwischengefügten Stützstruktur, in einer Ausnehmung der angrenzenden Rahmenplatte angeordnet. Dadurch kann sie bei der Montage des Membranmodul-Plattenstapels gegen Verrutschen gesichert in der Rahmenplattenausnehmung gehalten werden. Zudem besteht hierdurch die Möglichkeit, die Trägerplatte mit relativ geringem Aufwand als planes Bauteil fertigen zu können, in das ein- oder beidseitig die Trenngasaufnahmestruktur eingebracht ist.

Bei einem nach Anspruch 5 weitergebildeten Membranmodul sind durchgängig metallische Materialien für die verschiedenen Komponenten des Plattenstapels derart gewählt, daß die Komponenten durch ein einheitliches Löt- oder Schweißverfahren gasdicht zu dem Plattenstapel gefügt werden können. Dies reduziert den Fertigungsaufwand.

Eine vorteilhafte Ausführungsform der Erfindung ist in den Zeichnungen dargestellt und wird nachfolgend beschrieben. Hierbei zeigen:
- Fig. 1: eine verkürzte Querschnittansicht einer Stapelbaueinheit eines Membranmoduls zur Wasserstoffabtrennung mit einer Abtrenneinheit und beidseitig anschließenden Rahmenplatten,
- Fig. 2: eine Längsschnittansicht längs der Linie II-II von Fig. 1,
- Fig. 3: eine Draufsicht auf die der Abtrenneinheit abgewandte Seite einer der Rahmenplatten und
- Fig. 4: eine Draufsicht auf die der Abtrenneinheit zugewandte Seite einer der Rahmenplatten.

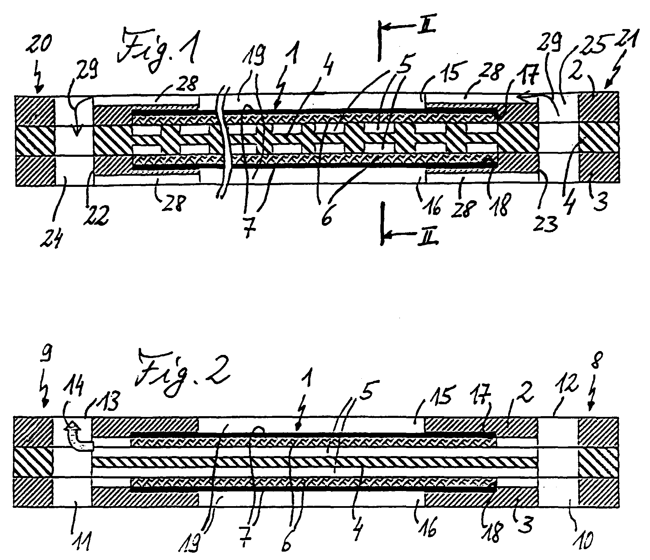

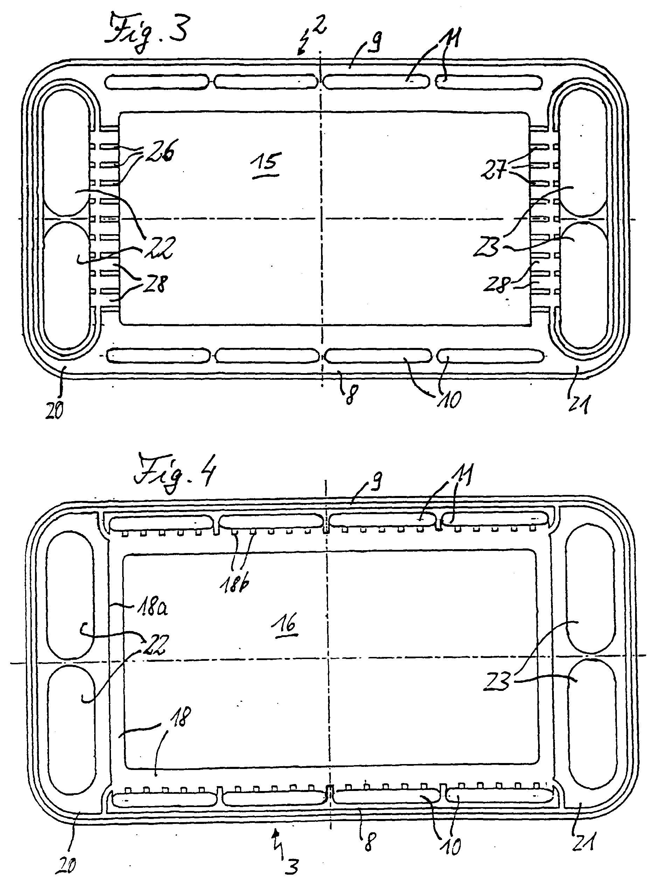

Die in den Fig. 1 und 2 dargestellte Stapelbaueinheit für ein Wasserstoffabtrenn-Membranmodul in Plattenstapelbauweise besteht aus einer Abtrenneinheit 1, an die beidseitig je eine Rahmenplatte 2, 3 anschließt. Die Abtrenneinheit 1 beinhaltet eine Trägerplatte 4, die bis auf einen umlaufenden Randbereich beidseitig mit einer Nut/Steg-Struktur versehen ist, indem dort jeweils eine Reihe parallel verlaufender Nuten 5 eingebracht ist. Die Nuten 5 stellen eine Trenngasaufnahmestruktur dar, die den abgetrennten Wasserstoff aufnimmt und weiterleitet. Die Trägerplatte 4 fungiert damit als ein Wasserstoffleitblech mit beidseitiger, wasserstoffableitender Nut/Steg-Struktur 5. Zudem dient sie als Versteifung der Wandung. Auf jeder der beiden Seiten ist gegen die Nut/Steg-Struktur 5 jeweils ein wasserstoffdurchlässiges Metallgewebe 6 gelegt, gegen das andererseits je eine selektiv wasserstoffdurchlässige Metallmembran 7 anliegt.

Das Metallgewebe 6 dient dabei als Stützstruktur für die Metallmembran 7.

Wie aus Fig. 2 erkennbar, besitzen die Trägerplatte 4 und die beiden angrenzenden Rahmenplatten 2, 3 auf zwei gegenüberliegenden Seitenbereichen 8, 9 sich in Stapelrichtung fluchtend überlappende Anschlußöffnungen 10, 11, die damit entsprechende, in Stapelrichtung senkrecht zu den Ebenen der gestapelten Platten 1, 2, 3 verlaufende Wasserstoffanschlußkanäle 12, 13 bilden, die mit den wasserstoffableitenden Trägerplattennuten 5 in Verbindung stehen. Abgetrennter Wasserstoff 14 kann so über die Nuten 5 zu einem Stapelseitenbereich geführt und über die dortigen Anschlußkanäle stirnseitig aus dem Plattenstapel abgezogen werden. Wie aus den Fig. 3 und 4 hervorgeht, sind entlang der beiden längeren Seiten 8, 9 der rechteckförmigen Platten je vier langlochförmige Wasserstoffanschlußöffnungen 10, 11 ausgebildet. Die wasserstoffableitenden Nuten 5 erstrecken sich damit längs der kürzeren Querrichtung des Plattenstapels, so daß der abgetrennte, in den Nuten 5 gesammelte Wasserstoff über einen relativ kurzen Strömungsweg abgezogen werden kann. Um die Wasserstoffabführung zu fördern, kann in üblicher Weise ein Spülgas verwendet werden. Dieses wird dann stapelstirnseitig über die Wasserstoffanschlußkanäle im einen Seitenbereich zugeführt, die dann als Spülgasverteilerkanäle fungieren, und zusammen mit dem mitgeführten Wasserstoff über die Wasserstoffanschlußkanäle im gegenüberliegenden Seitenbereich wieder stirnseitig aus dem Plattenstapel herausgeführt.

Die Rahmenplatten 2, 3 definieren je einen großflächigen Freiraum 15, 16, wobei diese Freiräume 15, 16 die abtrennaktive Fläche definieren, über die das zugeführte Mischgas mit den wasserstoffabtrennenden Membranen 7 in Kontakt steht. Die Membranen 7 und ihre zugehörigen Metallgewebe-Stützstrukturen 6 erstrecken sich umlaufend etwas über diese Freiräume 15, 16 hinaus, wobei sie in passenden Ausnehmungen 17, 18 aufgenommen sind, die in den Rahmenplatten 2, 3 auf deren der Abtrenneinheit 1 zugewandten Seite eingebracht sind. In Fig. 4 sind die seitlichen Ränder 18a, 18b zu erkennen, die entlang der kürzeren Plattenseiten von einer durchgehenden Kante 18a und entlang der längeren Platten-Seiten von Anschlagstegen 18b gebildet sind, welche zwischen sich Durchlässe belassen, über welche die wasserstoffableitenden Trägerplattennuten 5 in die seitlichen Wasserstoffanschlußkanäle 10, 11 münden.

Zum Aufbau eines betriebsfertigen Membranmoduls wird zunächst ein Stapel aus einem oder mehreren übereinandergestapelten Stapelbaueinheiten gemäß Fig. 1 und 2 gebildet, wonach dieser Stapel auf beiden Stirnseiten von nicht gezeigten Endplatten abgeschlossen wird. Dadurch bilden die Freiräume der beiden stirnendseitigen Rahmenplatten zusammen mit der jeweiligen Endplatte und, bei Verwendung mehrer Stapelbaueinheiten, je zwei Freiräume 15, 16 zweier aneinanderliegender Rahmenplatten 2, 3 Mischgasströmungsräume 19, durch die das Mischgas, d.h. das den abzutrennenden Wasserstoff enthaltende Gasgemisch, zwecks Abtrennung des Wasserstoffs über die Membranen 7 hindurchgeleitet werden kann.

Um das Mischgas zu- und abzuführen, sind in den beiden kürzeren Seitenbereichen 20, 21 der einzelnen Platten 1, 2, 3 je zwei langlochförmige Mischgasanschlußöffnungen 22, 23 vorgesehen. Auf jedem dieser beiden Seitenbereiche 20, 21 überlappen sich die jeweils zwei Mischgasanschlußöffnungen 22, 23 der übereinandergestapelten Platten 1, 2, 3 zur Bildung einer Mischgasanschlußkanalstruktur aus je zwei parallelen, in Stapelrichtung verlaufenden Mischgasanschlußkanälen 24, 25 auf jeder dieser beiden Plattenseiten 20, 21. Die von den Freiräumen 15, 16 der Rahmenplatten 2, 3 gebildeten Mischgasströmungsräume 19 stehen über Durchlässe 28 zwischen je zwei Stegen einer Kammstegstruktur 26, 27 mit den Mischgasanschlußöffnungen 22, 23 und damit den von diesen gebildeten Mischgasanschlußkanälen 24, 25 in Fluidverbindung. Dazu ist je eine solche Kammstegstruktur 26, 27 auf der von der Abtrenneinheit 1 abgewandten Seite jeder Rahmenplatte 2, 3 zwischen den Mischgasanschlußöffnungen 22, 23 und dem zugehörigen Freiraum 15, 16 ausgebildet.

Im Betrieb wird dann das Mischgas 29 über die beiden parallelen Mischgasanschlußkanäle des einen Stapelseitenbereichs, die dann als Mischgasverteilerkanäle fungieren, parallel in die Mischgasströmungsräume 19 eingeleitet, durchströmt diese entlang deren längerer Rechteckseite und kann dann über die beiden parallelen, als Sammelkanäle fungierenden Mischgasanschlußkanäle des gegenüberliegenden Seitenbereichs wasserstoffbefreit wieder abgeführt werden. Damit fließt das Mischgas im Kreuzstrom zum abgetrennten Wasserstoff längs der längeren Stapelquerseite, während der Wasserstoff über die kürzere Stapelquerseite abgezogen wird. Dies hat den Vorteil, daß bei gegebener Mischgasströmungslänge, die zur ausreichenden Wasserstoffabtrennung erforderlich ist, eine kompakte Bauform des Plattenstapel-Membranmoduls erzielbar ist. Außerdem sind in diesem Membranmodul die Druckverluste sehr gering, da das Mischgas über Anschlußkanäle mit vergleichsweise großem Querschnitt zu- und abgeführt und zwischen Zu- und Abfuhrkanal geradlinig durch die Stapelquerebenen geführt wird, ohne daß es serpentinenförmig umgeleitet wird. Ein weiterer Vorteil des dergestalt aufgebauten Moduls besteht darin, daß die Zu- und Abfuhr des Mischgases ebenso wie die Abfuhr des Wasserstoffs und ggf. die Zufuhr des Spülgases sämtlich über eine oder beide Stapelstirnseiten erfolgen kann, so daß keine Zugänglichkeit zum Plattenstapel an dessen Querseiten erforderlich ist. Zudem ist das Membranmodul sehr druckstabil, insbesondere sind die Wasserstoffabtrennmembranen 7 gegen den vom jeweils benachbarten Mischgasströmungsraum 19 einwirkenden Druck ausreichend durch das wasserstoffdurchlässige Metallgewebe 6 abgestützt, ohne daß dadurch die Wasserstoffableitfunktion der Trägerplatten 4 behindert wird.

Ein großer herstellungstechnischer Vorteil ist erzielbar, wenn die Rahmenplatten 2, 3 und die Trägerplatte 4 ebenso wie die Wasserstoffabtrennmembranen 7 und deren Metallgewebe-Stützstruktur 6 aus löt- oder schweißfähigen Materialien gefertigt sind. Für die Rahmenplatten 2, 3 und die Trägerplatte 1 kommt hierbei insbesondere Edelstahl in Betracht, für die Wasserstoffabtrennmembranen 7 ein spezifisch wasserstoffdurchlässiges Metallmaterial, wie Metalle der Elementgruppen IVb, Vb und VIII und deren Legierungen, und für deren Stützstruktur ein ausreichend gasdurchlässiges Gewebe, beispielsweise aus Metall. In diesem Fall können alle diese Komponenten des Membranmoduls durch eine geeignete Löt- oder Schweißabfolge eines Löt- oder Schweißverfahrens gasdicht zu dem Plattenstapel zusammengefügt werden. Als Schweißverfahren eignen sich beispielsweise Laserstrahl-, Ultraschall- oder Rollnahtschweißen. Dabei können die einzelnen Platten sukzessive an den jeweils schon bestehenden Stapel angelegt und mit diesem gasdicht verbunden werden, oder es können zunächst die gewünschte Anzahl einzelner Stapelbaueinheiten aus je einer Abtrenneinheit 1 und den beiden an sie angefügten Rahmenplatten 2, 3 vorgefertigt und anschließend die einzelnen Stapelbaueinheiten zum gesamten Membranmodul-Plattenstapel zusammengebaut werden. Ein dergestalt aus Metall gefertigtes Membranmodul hält hohen Drücken unter Wasserstoffatmosphäre bei Temperaturen bis 350°C stand, wie dies beispielsweise bei der Wasserstoffabtrennung aus dem Reformatgas einer Wasserdampfreformierung von Methanol gefordert ist. Der Zusammenbau des Moduls durch Löten oder Schweißen kann in hohen Stückzahlen sowie mit hoher Prozess- und Herstellgenauigkeit kostengünstig erfolgen. Je nach Anwendungsfall können die jeweiligen Stapelbaueinheiten oder daraus gebildete, größere Stapelteileinheiten vor dem vollständigen Zusammenbau auf Dichtheit getestet werden. Die modulare Bauweise erlaubt eine einfache Anpassung an verschiedene Leistungsklassen, indem unterschiedlich viele Stapelbaueinheiten und/oder Platten mit unterschiedlichen Grundmaßen verwendet werden.

Insgesamt macht das oben beschriebene Beispiel deutlich, daß sich das erfindungsgemäße Membranmodul in einer sicheren Prozeßführung durch Fügen, z.B. mittels Laserstrahlschweißen, mit sehr hohen Vorschubgeschwindigkeiten kompakt und modular bauen läßt. Die Art der Strömungskanäle führt nur zu geringen Druckverlusten und zu einer gleichmäßigen Strömungsverteilung. Mit dem erfindungsgemäßen Membranmodul kann Wasserstoff mit einem Reinheitsgrad von größer als 99,99999% aus dem Reformatgas einer Methanolreformierungsreaktion abgetrennt und in dieser hohen Reinheit Z.B. einem Brennstoffzellensystem zugeführt werden. Es versteht sich, daß das Membranmodul auch für andere Zwecke üerall dort nutzbringend einsetzbar ist, wo ein mittels einer Abtrennmembran selektiv abtrennbares Gas aus einem Gasgemisch abgetrennt werden soll.

## Patentansprüche

1. Membranmodul zur selektiven Gasabtrennung in Plattenstapelbauweise, insbesondere zur Wasserstoffabtrennung, mit
- einer oder mehreren übereinandergestapelten Abtrenneinheiten (1) sowie zwischenliegenden und/oder stapelendseitigen Rahmenplatten (2, 3), wobei jede Abtrenneinheit eine Trägerplatte (4) mit einer Trenngasaufnahmestruktur (5) und wenigstens eine zugehörige Gasabtrennmembran (7) aufweist und die Rahmenplatten eine Mischgasströmungsraumstruktur (15, 16) beinhalten,
**dadurch gekennzeichnet, daß**
- jede Abtrenneinheit (1) und die Rahmenplatten (2, 3) in einem ersten Seitenbereich (20) angeordnete, erste Mischgasanschlußöffnungen (22), die sich in Stapelrichtung unter Bildung einer ersten Mischgasanschlußkanalstruktur (24) überlappen, in einem zweiten Seitenbereich angeordnete, zweite Mischgasanschlußöffnungen (23), die sich in Stapelrichtung unter Bildung einer zweiten Mischgasanschlußkanalstruktur (25) überlappen, in einem dritten Seitenbereich (8) angeordnete, erste Trenngasanschlußöffnungen (10), die sich in Stapelrichtung unter Bildung einer ersten Trenngasanschlußkanalstruktur (12) überlappen, und in einem vierten Seitenbereich (9) angeordnete, zweite Trenngasanschlußöffnungen (11) aufweisen, die sich in Stapelrichtung unter Bildung einer zweiten Trenngasanschlußkanalstruktur (13) überlappen, wobei die beiden Mischgasanschlußkanalstrukturen mit den Mischgasströmungsraumstrukturen (15, 16) und die beiden Trenngasanschlußkanalstrukturen mit der oder den Trenngasaufnahmestrukturen (5) in Fluidverbindung stehen.

2. Membranmodul nach Anspruch 1, weiter
**dadurch gekennzeichnet, daß**
jede Abtrenneinheit (1) und die Rahmenplatten (2, 3) rechteckförmig sind und sich die beiden Mischgasanschlußkanalstrukturen (24, 25) an den beiden kürzeren Rechteckseiten sowie die beiden Trenngasanschlußkanalstrukturen (12, 13) an den beiden längeren Rechteckseiten befinden.

3. Membranmodul nach Anspruch 1 oder 2, weiter
**dadurch gekennzeichnet, daß**
die jeweilige Trägerplatte (4) ein- oder beiseitig als Trenngasaufnahmestruktur eine Nut/Steg-Struktur (5) aufweist, gegen welche die jeweilige Gasabtrennmembran (7) unter Zwischenfügung einer porösen Stützstruktur (6) anliegt.

4. Membranmodul nach einem der Ansprüche 1 bis 3, weiter
**dadurch gekennzeichnet, daß**
die jeweilige Gasabtrennmembran (7) in einer Ausnehmung (17, 18) der angrenzenden Rahmenplatte (2, 3) aufgenommen ist.

5. Membranmodul nach einem der Ansprüche 1 bis 4, weiter
**dadurch gekennzeichnet, daß**
die Gasabtrennmembran (7) aus einem für das abzutrennende Gas durchlässigen Metallmaterial besteht, die Stützstruktur (6) von einem Metallgewebe gebildet ist, die Trägerplatte (4) und die Rahmenplatten (2, 3) aus Edelstahl gefertigt sind und alle genannten Komponenten durch ein Löt- oder Schweißverfahren gasdicht zum Plattenstapel zusammengefügt sind.
